# EUROPÄISCHE PATENTSCHRIFT

(11) **EP 1 318 066 B1**
(45) Veröffentlichungstag und Bekanntmachung des Hinweises auf die Patenterteilung: **26.07.2006**
(21) Anmeldenummer: 02026142.6
(22) Anmeldetag: 23.11.2002
(51) Int. Cl.: B62D 53/06

(54) **Anhängerfahrzeug zur Verbindung mit einem Zugfahrzeug, insbesondere einem Schwerlast-Lkw**
Trailer vehicle for connection to a tractor, especially to a heavy load transport vehicle
Véhicule à remorque pour accrochage à un tracteur, notamment à un véhicule de transport poids lourd

(30) Priorität: 06.12.2001 DE 10159977
(43) Veröffentlichungstag der Anmeldung: 11.06.2003
(73) Patentinhaber: BPW Bergische Achsen Kommanditgesellschaft, 51674 Wiehl (DE)
(72) Erfinder: van Wijk, Antonius, 2636 HX Schipluiden (NL); Adolfs, Manfred, 51702 Bergneustadt (DE)
(74) Vertreter: Christophersen, Ruth

(56) Entgegenhaltungen:
- DE-U- 9 203 923
- US-A- 2 888 268
- US-A- 3 203 711
- US-A- 5 025 877

## Beschreibung

Die Erfindung betrifft ein Anhängerfahrzeug zur Verbindung mit einem Zugfahrzeug, insbesondere einem Schwerlast-Lkw, mit einem sich über die Fahrzeuglänge erstreckenden Tragrahmen, der in seinem vorderen Bereich mit einem Königszapfen zur Verbindung mit dem Zugfahrzeug versehen ist, sowie mit mindestens zwei gegenüber dem Tragrahmen abgestützten, vorzugsweise luftgefederten Achsen.

Es ist aus dem Stand der Technik bereits bekannt, zur Entlastung des Achsaggregates eines Anhängerfahrzeuges eine zusätzliche, mitlaufende Achse vor dem Achsaggregat anzuordnen, wobei diese zusätzliche Achse bei Bedarf mittels eines Achslifts anhebbar ist. Ein Anhängerfahrzeug mit diesen Merkmalen ist z.B. aus der US 4,398,738 bekannt. Die Entlastungsachse befindet sich hierbei an einem Drehschemel, welcher unter der Fahrzeugmittelachse angeordnet ist. Bei der Achskonstruktion nach der US 4,398,738 wird zwar eine deutliche Entlastung des im hinteren Teil des Anhängerfahrzeuges angeordneten Achsaggregates erreicht, hingegen keine nennenswerte Entlastung des Königszapfens, mit dem sich das Anhängerfahrzeug auf dem Zugfahrzeug abstützt.

Zugfahrzeuge sind als Zweiachskonstruktionen sowie als Einachskonstruktionen bekannt, wobei sich diese Zahl der Achskonstruktionen auf die hinteren, angetriebenen Achsen des Zugfahrzeuges bezieht. In jüngerer Zeit sind Sattelauflieger-Anhängerfahrzeuge in Gebrauch, die ein sehr hohes Gewicht im Bereich des Königzapfens ausüben. Solche Sattelauflieger dürfen nur mit Zugfahrzeugen betrieben und kombiniert werden, die über ein Doppelachs-Aggregat verfügen. Denn nur dann verteilt sich die hohe Drucklast auf den Königzapfen auf zwei Zugfahrzeug-Achsen, und deren höchste zulässige Achslast wird nicht überschritten. Würde hingegen ein solcher Sattelauflieger mit einem Zugfahrzeug mit Einachs-Aggregat aufgesetzt, würde diese Achse hinsichtlich ihrer maximal zulässigen Achslast überfordert. Für den Spediteur stellt sich aber damit das Problem, für das Ziehen derartiger Sattelauflieger jeweils das richtige Zugfahrzeug zur Verfügung stellen zu müssen, also ein Zugfahrzeug mit Doppelachs-Aggregat. Aus oftmals logistischen Problemen in der Fuhrparkverwaltung heraus stehen aber oftmals solche Zugfahrzeuge nicht zur Verfügung. Es ist daher wünschenswert, derartige schwere Sattelauflieger auch an Zugfahrzeugen mit Einachs-Aggregat ankoppeln zu können.

Vorgeschlagen wird in der US-A-3203711 hierzu, daß sich die in Fahrtrichtung vorderste Achse zur Entlastung des Königzapfens über einen um eine vertikale Drehachse drehbaren Drehschemel gegenüber dem Tragrahmen abstützt, und die Drehachse in Fahrtrichtung vor der Entlastungsachse angeordnet ist.

In der US-A-3203711 wird daher die frei mitlaufende Entlastungsachse so weit vorne unter dem Anhängerfahrzeug angeordnet, daß der Königszapfen entlastet wird. Die Entlastung des Königzapfens ist insbesondere so groß, daß das Anhängerfahrzeug mit einem solchen Zugfahrzeug kombiniert werden kann, dessen Antriebsachse bei normalem Fahrbetrieb durch die auf den Königszapfen einwirkende Belastung überfordert wäre, da es zu einer Überschreitung der zulässigen Achslast käme. Das Anhängerfahrzeug darf daher, ohne daß es zu einer Überschreitung der zulässigen Achslast des Zugfahrzeuges kommt, sowohl mit einem Zugfahrzeug mit Zweiachsaggregat, wie auch mit einem Zugfahrzeug mit Einachsaggregat betrieben werden. Dies stellt in der Fuhrparkverwaltung z.B. großer Speditionsunternehmen einen beträchtlichen logistischen Vorteil dar.

Der Erfindung liegt die Aufgabe zugrunde, die Laufruhe der Frei unitlaufanden Entlastungsachse zu ver - bessern.

Dies wird erfindungsgemäß dadurch erreicht, daß die Spurweite der Entlastungsachse nicht mehr als 2/3 der Spurweite der Achse bzw der Achsen des Achsaggregates beträgt.

Vorzugsweise soll die Entlastungsachse mindestens zu 50% Anteil den Königszapfen entlasten. Dies läßt sich insbesondere dann erreichen, wenn die Entlastungsachse in Längsrichtung des Anhängerfahrzeuges vor der Mitte der Strecke zwischen Königszapfen und Achsaggregat angeordnet ist.

Mit einer weiteren Ausgestaltung wird vorgeschlagen, daß die Entlastungsachse an einem einzigen Längslenker geführt ist, der auf der Fahrzeugmittelachse und mittig zwischen den beiden Rändern der Entlastungsachse angeordnet ist.

In Bezug auf bestimmte Fahrsituationen, z. B. das Rückwärtsfahren, ist es von Vorteil, wenn gemäß einer weiteren Ausgestaltung der Erfindung die Entlastungsachse mittels eines Liftaggregates anhebbar ist. Auch das Rangieren des Fahrzeuges wird in vielen Fällen durch Anheben der Entlastungsachse vereinfacht. Vorteilhaft ist ferner der Einsatz von Mitteln zur selbsttätigen Betätigung des Liftaggregates bei Rückwärtsfahrt des Anhängerfahrzeuges.

Vorzugsweise ist die Entlastungsachse über mindestens ein Luftfederelement gegenüber dem Drehschemel abgestützt. In diesem Fall kann die Steuerung des Luftdrucks in dem Luftfederelement in Abhängigkeit von der Größe der Stützkraft auf den Königszapfen bzw. von der auf den Achsen des Zugfahrzeuges lastenden Gewichtskraft erfolgen. Ist z.B. die zulässige Achslast nur geringfügig überschritten, so kann der Luftdruck in dem Luftfederelement zumindest reduziert werden. Bei höherer Überschreitung der Achslast kann der Luftdruck in dem Luftfederelement entsprechend erhöht werden. Liegt eine überhöhte Achslast bei den Achsen des Zugfahrzeuges nicht vor, so kann die Entlastungsachse angehoben werden. Bei unbeladenem oder nur leicht beladenem Anhängerfahrzeug ist die Entlastungsachse vorzugsweise mit Hilfe des Liftaggregates angehoben. In diesem Zustand wird die maximal zulässige Stützkraft auf den Königszapfen und damit die maximal zulässige, auf den Achsen des Zugfahrzeuges lastende Gewichtskraft nicht überschritten. Indem die Entlastungsachse mit Hilfe des Liftaggregates angehoben wird, wird der Rollwiderstand des Anhängerfahrzeuges verringert und ein unnötiger Verschleiß der Entlastungsachse und der weiter daran angeordneten Elemente, beispielsweise der Reifen, verhindert. Zum Einsatz kommt die Entlastungsachse vorzugsweise nur dann, wenn die zulässige Achslast auf den Achsen des Zugfahrzeuges überschritten wird. Dies ist bei vollbeladenem Anhängerfahrzeug oder bei ungünstigen Beladungsverhältnissen bei teilgeladenem Anhängerfahrzeug der Fall.

Eine weitere Ausgestaltung ist gekennzeichnet durch einen Drucksensor zur Erfassung der Stützkraft auf den Königszapfen.

Alternativ kann ein Drucksensor zur Erfassung des Luftdrucks in einem Luftfederelement einer Achse des Zugfahrzeuges vorgesehen sein.

Eine Anpassung des Luftdrucks in dem Luftfederelement kann alternativ auch aufgrund von in eine an dem Anhängerfahrzeug angeordnete Eingabeeinrichtung eingegebenen Parametern erfolgen. In die Eingabeeinrichtung können Parameter wie die gemessene Achslast des Zugfahrzeuges, die zulässige Achslast, der Betrag, um den die zulässige Achslast überschritten wird oder einfach eine Vorgabe zum Anheben bzw. Absenken der Entlastungsachse eingegeben werden. Eine Steuerung paßt den Luftdruck in dem Luftfederelement entsprechend an.

Die Anordnung der Entlastungsachse weit vorne unter dem Anhängerfahrzeug hat zur Folge, daß beim Bremsen des Fahrzeuges eine Lastverlagerung auf die Räder der Entlastungsachse erfolgt, wodurch diese proportional stärker belastet, hingegen die Räder des Achsaggregates proportional entlastet werden. Falls nur die Räder des Achssaggregates, nicht hingegen die Räder der Entlastungsachse gebremst sind, führt dies zu einer Beeinträchtigung der Bremsleistung des Anhängerfahrzeuges. Zur Vermeidung dieses Effektes werden mit einer weiteren Ausgestaltung Mittel zur Steuerung des Luftdrucks in dem Luftfederelement in Abhängigkeit von der Fahrzeugverzögerung vorgeschlagen. Beispielsweise umfassen diese Mittel einen die Fahrzeugverzögerung erfassenden Beschleunigungssensor. Der Luftdruck in dem Luftfederelement wird abgesenkt, sobald das Fahrzeug nennenswert verzögert. Die Absenkung des Luftdrucks in dem Luftfederelement kann auch durch ein Signal eines Sensors ausgelöst werden, der die Betätigung einer auf gebremste Achsen des Anhängerfahrzeuges wirkenden Verzögerungseinrichtung wahrnimmt. Dabei kann die Entlastungsachse zusätzlich mittels des Liftaggregates angehoben werden, um den Bremsweg nicht über ungebremste Achslasten zu verlängern. Beispielsweise kann ein Signal zur Auslösung der Bremsleuchte das Absenken des Luftdrucks im Luftfederelement auslösen.

Eine weitere Ausgestaltung der Erfindung sieht vor, daß die Anordnung aus Drehkranz und Drehschemel zumindest teilweise in einem in dem Tragrahmen gebildeten Aufnahmeraum versenkt angeordnet sind. Der Tragrahmen kann ein herkömmlicher Leiterrahmen mit Längsträgern sein, wobei zwischen den Längsträgern ein Aufnahmeraum gebildet ist.

Die Entlastungsachse kann zur Verbesserung der Bremswirkung des Anhängerfahrzeuges auch als gebremste Achse ausgeführt sein.

Weitere Vorteile und Einzelheiten werden nachfolgend unter Bezugnahme auf die Zeichnungen erläutert. Auf den Zeichnungen zeigen:
- Fig. 1: in einer Seitenansicht einen Fahrzeugverband bestehend aus einem Zugfahrzeug und einem damit gekoppelten Anhängerfahrzeug in Gestalt eines Sattelaufliegers, wobei der Sattelauflieger zusätzlich zu den drei Achsen seines Achsaggregates eine weit vorne angeordnete Entlastungsachse aufweist;
- Fig. 2: den Sattelauflieger nach Fig. 1 in einer prinzipiellen Draufsicht unter Darstellung der einzelnen Räder der Achsen;
- Fig. 3: eine Seitenansicht der unter dem Tragrahmen des Sattelaufliegers drehbar angeordneten Entlastungsachse einschließlich der zugehörigen Achsaggregat-Teile und
- Fig. 4: eine Draufsicht auf die Entlastungsachse nach Fig. 3.

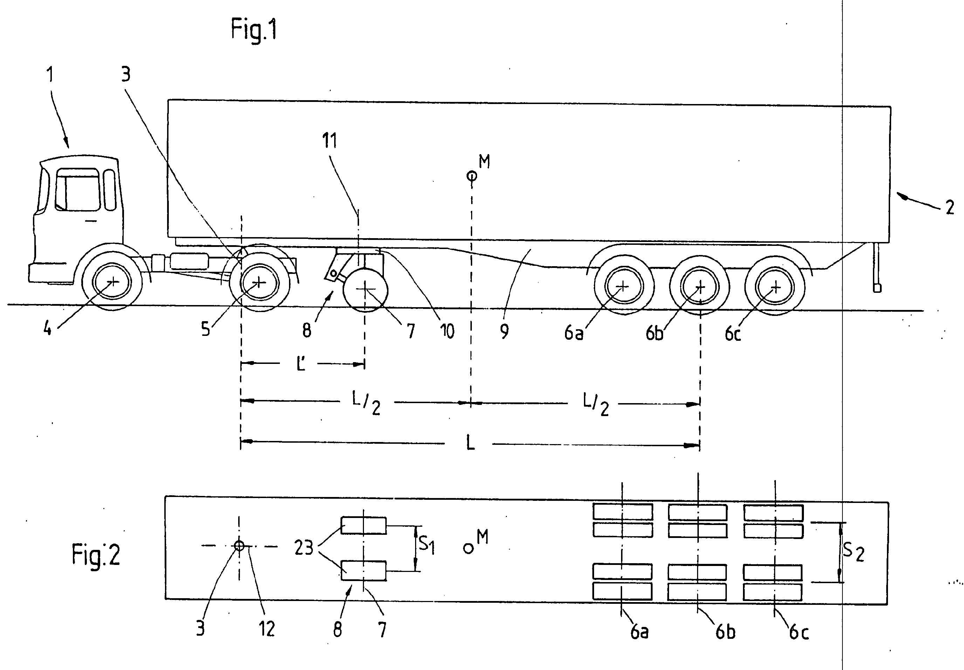

Die Fig. 1 zeigt einen Lkw-Zugverband bestehend aus dem angetriebenen Zugfahrzeug 1 und dem gezogenen Anhängerfahrzeug 2, wobei es sich bei letzterem um einen Sattelauflieger handelt, der in an sich bekannter Weise über einen Königszapfen 3 mit dem Zugfahrzeug 1 gekoppelt ist.

Das Zugfahrzeug ist gemäß Fig. 1 zweiachsig mit der Lenkachse 4 und einer zwillingsbereiften Antriebsachse 5. Für derartige Antriebsachsen 5 ist vom Gesetzgeber eine zulässige höchste Achslast vorgeschrieben, z. B. 10 t. Falls anstelle der in Fig. 1 dargestellten einfachen Antriebsachse 5 dort ein Doppelachs-Aggregat mit zwei hintereinander angeordneten Antriebsachsen zum Einsatz kommt, verdoppelt sich entsprechend auch die Belastungsfähigkeit auf 2 x 10 t und damit 20 t. Häufig stehen jedoch derartige Zugfahrzeuge mit Doppelachs-Aggregaten nicht zur Verfügung. Insbesondere für solche Fälle ist daher die nachfolgend beschriebene Anhängerkonstruktion geeignet.

Das Anhängerfahrzeug 2 ist in seinem hinteren Bereich in an sich bekannter Weise mit einem Achsaggregat aus mehreren nicht-angetriebenen Achsen versehen, beim Ausführungsbeispiel sind dies insgesamt drei Achsen 6a, 6b, 6c. Im Regelfall sind diese Achsen luftgefedert. Die in Fahrtrichtung vorderste Achse 6a ist mittels eines Achslifts anhebbar, um so den Rollwiderstand bei unbeladenem Anhänger zu reduzieren.

Abweichend von üblichen Anhängerfahrzeugen ist das erfindungsgemäße Anhängerfahrzeug mit einer weiteren Achse versehen, die im folgenden als Entlastungsachse 7 bezeichnet wird. Die Entlastungsachse 7 ist Bestandteil eines Achsaggregates 8, welches sehr weit vorne unter dem Tragrahmen 9 des Anhängerfahrzeuges befestigt ist. Die bevorzugte Lage des zusätzlichen Achsaggregates 8 mit der Entlastungsachse 7 ist in Fig. 1 anhand entsprechender Längenangaben wiedergegeben. Die Bezugslänge ist hierbei der Abstand L zwischen dem Königszapfen 3 und dem hinteren Achsaggregat, bestehend aus den Achsen 6a, 6b und 6c. Bezugslinie ist hierbei die mittlere Achse 6b. Würde das Achsaggregat nur aus zwei Achsen z.B. 6a und 6b bestehen, würde die Bezugslinie in der Mitte dieser beiden Achsen verlaufen. Die Entlastungsachse 7 weist von dem Königszapfen 3 lediglich den Abstand L' auf. Dieser Abstand L' ist geringer, als die Hälfte L/2 des Abstandes L. Die Entlastungsachse 7 ist daher in Längsrichtung des Anhängerfahrzeuges vor der Mitte M des Abstandes L zwischen Königszapfen 3 und dem hinteren Achsaggregat angeordnet.

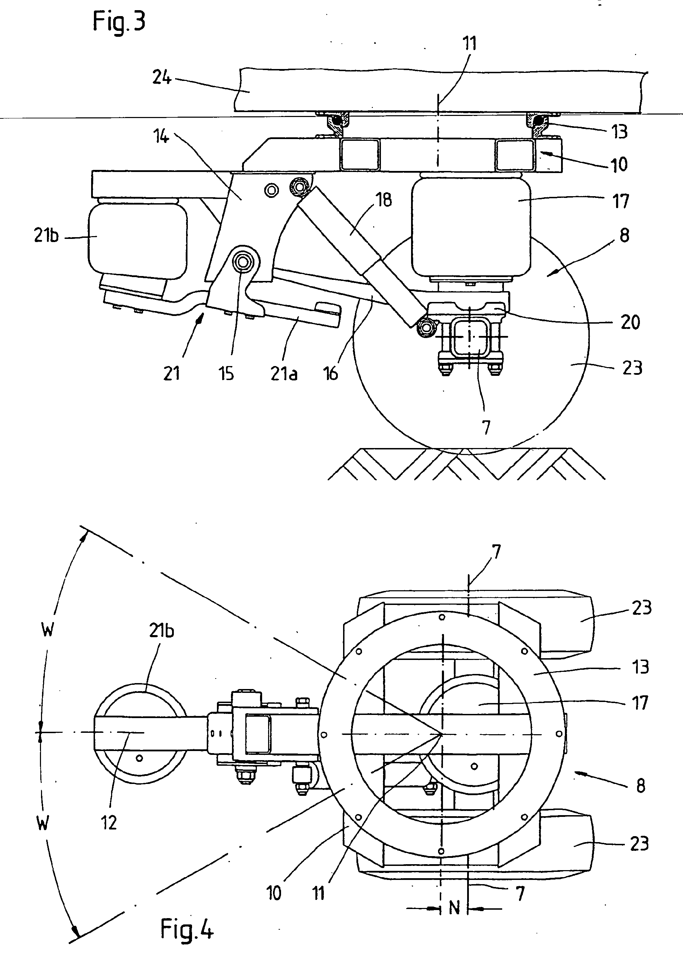

Die Entlastungsachse 7 ist über einen Drehschemel 10 gegenüber dem Tragrahmen 9 abgestützt. In Fig. 3 ist die vertikale Drehachse 11 des Drehschemels 10 eingezeichnet. Die vertikale Drehachse 11 befindet sich genau auf der Fahrzeugmittelachse 12 des Anhängerfahrzeuges. In Fahrtrichtung befindet sich die vertikale Drehachse 11 des Drehschemels vor der Entlastungsachse 7. Da außerdem der Drehschemel mit der Entlastungsachse frei drehbar um die vertikale Drehachse 11 ist, findet während der Vorwärtsfahrt eine selbsttätige Ausrichtung der beiden Räder der Entlastungsachse 7 in Fahrtrichtung statt. Der entsprechende Nachlauf ist in Fig. 4 mit dem Bezugszeichen N eingezeichnet.

In Fig. 2 ist dargestellt, daß die Spurweite S₁ der Entlastungsachse 7 deutlich geringer ist, als die Spurweite S₂ der Achsen 6a, 6b, 6c des hinteren Achsaggregates. Vorzugsweise ist die Spurweite S₁ nur halb so groß, wie die Spurweite S₂, wobei für das Maß der Spurweite S₂ im Falle einer Zwillingsbereifung, wie auf Fig. 2 dargestellt ist, die. Mitte zwischen den beiden Reifen der Zwillingsbereifung maßgeblich ist.

Einzelheiten der Entlastungsachse werden nachfolgend anhand der Figuren 3 und 4 erläutert. Der Drehschemel 10 ist über einen kugelgelagerten Drehkranz 13 an einem Rahmen 24 dem Tragrahmen 9 des Fahrzeuges abgestützt. Der Rahmen 24 kann Bestandteil des Tragrahmens 9 sein, ist jedoch im gezeigten Ausführungsbeispiel ein separater Rahmen, der mit dem Tragrahmen 9 beispielsweise durch Schweißen verbunden ist. Der Rahmen 24 kann an dem Tragrahmen 9 eines bestehenden Anhängerfahrzeuges 2 befestigt, die Entlastungsachse 7 so nachgerüstet werden. Bei dem gezeigten Ausführungsbeispiel ist der Tragrahmen 9 mit zwei Längsträgern ausgebildet, welche einen Abstand von etwa 1,3 m zueinander aufweisen. In dem zwischen den Längsträgern ausgebildeten Aufnahmeraum ist der Rahmen 24 im Bereich des Fahrzeugbodens des Anhängerfahrzeuges 2 eingesetzt. Der Drehkranz weist einen Durchmesser von ca. 80 cm auf, so daß dieser und auch zum Teil der Drehschemel 10 in den Aufnahmeraum zwischen den Längsträgern versenkt sind.

Bestandteil des Drehschemels 10 ist eine nach unten ragende Konsole 14, an der mittels eines Bolzens 15 der Längslenker 16 der Entlastungsachse 7 schwenkbar befestigt ist. Zugleich stützt sich der Längslenker 16, welcher zentral auf der Fahrzeugmittelachse 12 angeordnet ist, über ein Luftfederelement 17 gegenüber dem Drehschemel 10 ab. Zwischen Konsole 14 und Längslenker 16 bzw. Entlastungsachse 7 erstreckt sich ein Stoßdämpfer 18. Die nahezu starre Verbindung zwischen Entlastungsachse 7 und Längslenker 16 wird über einen verschraubten Achslappen 20 realisiert, über dem sich das Luftfederelement 17 auf der Oberseite des Längslenkers 16 abstützt.

Bestandteil des Achsaggregates 8 ist ferner ein Liftaggregat 21, bestehend aus einer in bezug auf die Konsole 14 gelagerten Wippe 21a sowie einem weiteren Luftfederelement 21 b. Bei Druckbeaufschlagung des Luftfederelementes 21b drückt die Wippe 21a mit ihrem anderen Arm von unten gegen den Längslenker 16, und hebt hierdurch die Entlastungsachse 7 an, wobei selbstverständlich zu gleicher Zeit der Luftdruck in dem Luftfederelement 17 reduziert werden muß. Die Entlastungsachse 7 läßt sich mittels des Liftaggregates 21 soweit anheben, daß die beiden Räder 23 der Entlastungsachse 7 den Bodenkontakt vollständig verlieren.

Der maximale Dreh- bzw. Schwenkwinkel um die vertikale Drehachse 11 ist in Fig. 4 mit W bezeichnet. Er beträgt zu beiden Seiten hin vorzugsweise 60°.

Infolge des Nachlaufs N und ferner infolge der geringen Spurweite S₁ wird bei Geradeausfahrt ein gleichmäßiger und ruhiger Lauf der Räder der Entlastungsachse erreicht. Auch eine Kurvenfahrt ist infolge der freien Drehbarkeit des Drehschemels 10 um die vertikale Drehachse 11 auch bei engen Fahrradien möglich.

Bei Rückwärtsfahrt des Anhängerfahrzeuges wird die Entlastungsachse 7 mittels des Liftaggregates 21 angehoben. Dies erfolgt vorzugsweise vollautomatisch, indem die entsprechende Steuerung des Luftdrucks in den Luftfederelementen 17 und 21b mittels einer Steuereinrichtung in Abhängigkeit von dem Einlegen des Rückwärtsgangs im Zugfahrzeug 1 erfolgt. Mit Einsetzen der Vorwärtsfahrt wird die Entlastungsachse 7 sodann wieder abgesenkt, wobei sie sich sehr schnell wieder in Fahrtrichtung zentriert.

Die Entlastungsachse 7 übernimmt im Einsatz einen wesentlichen Anteil des Gewichts des beladenen Anhängerfahrzeuges. Durch die Nähe der Entlastungsachse 7 zum Königszapfen 3 wird bei abgesenkter Entlastungsachse 7 vor allem der Königszapfen 3 entlastet, was wiederum zur Folge hat, daß die auf der Antriebsachse 5 des Zugfahrzeuges 1 liegende Belastung geringer ausfällt.

Üblicherweise führt das Abbremsen eines Fahrzeuges zu einer stärkeren Belastung der vorderen, und einer relativen Entlastung der hinteren Räder. Da im vorliegenden Fall jedoch nur die Achsen 6a, 6b, 6c des hinteren Achsaggregates mit Bremseinrichtungen versehen sind, wohingegen die Räder 23 der Entlastungsachse 7 ungebremst sind, könnte es ohne weitergehende Maßnahmen zu einer Verschlechterung des Bremsverhaltens des Anhängerfahrzeuges kommen. Um dies zu vermeiden, erfolgt eine Steuerung des Luftdrucks in dem Luftfederelement 17 in Abhängigkeit von der mittels geeigneter Sensoren erfaßten Fahrzeugverzögerung. Als Sensor ist insbesondere ein Beschleunigungssensor geeignet. Je stärker die Verzögerung des Fahrzeuges ist, um so stärker wird der Luftdruck in dem Luftfederelement 17 abgesenkt. Hierbei wird auf die vorhandenen Steuerelemente der Druckluftanlage des Anhängerfahrzeuges zurückgegriffen.

Alternativ kann bei ungebremster Entlastungsachse 7 bei Betätigung einer auf die gebremsten Achsen des Anhängerfahrzeuges 2 wirkenden Verzögerungseinrichtung das Luftfederelement 17 drucklos geschaltet oder sogar die Entlastungsachse 7 mit Hilfe des Liftaggregats 21 angehoben werden. Hierzu stellt ein geeigneter Sensor die Betätigung der Verzögerungseinrichtung fest und löst eine Entlüftung des Luftfederelements 17 sowie eine Belüftung des Luftfederelements 21 b aus. Auf diese Weise wird verhindert, daß beim Bremsen ein Teil der Fahrzeuglast auf einer ungebremste Achse ruht und so den Bremsweg verlängert. Nach einem Bremsvorgang wird die Entlastungsachse 7 durch Belüften des Luftfederelementes 17 und Entlüften des Luftfederelementes 21b wieder abgesenkt.

Von Vorteil ist ferner, wenn der Luftdruck in dem Luftfederelement 17 außerdem in Abhängigkeit von der Größe der auf den Königszapfen 3 wirkenden Stützkraft, bzw. der zu entlastenden Antriebsachse 5 wirkenden Last eingestellt wird. Hierzu kann z. B. im Bereich des Königszapfens 3 ein auf der Zeichnung nicht näher dargestellter Drucksensor eingebaut sein, oder der Druck in der Luftfederung der Antriebsachse 5 des Zugfahrzeugs 1 entsprechend ausgewertet werden.

### Bezugszeichenliste

- 1: Zugfahrzeug
- 2: Anhängerfahrzeug
- 3: Königszapfen
- 4: Lenkachse
- 5: Antriebsachse
- 6a: Achse
- 6b: Achse
- 6c: Achse
- 7: Entlastungsachse
- 8: Achsaggregat
- 9: Tragrahmen
- 10: Drehschemel
- 11: vertikale Drehachse
- 12: Fahrzeugmittelachse
- 13: Drehkranz
- 14: Konsole
- 15: Bolzen
- 16: Längslenker
- 17: Luftfederelement
- 18: Stoßdämpfer
- 20: Achslappen
- 21: Liftaggregat
- 21a: Wippe
- 21 b: Luftfederelement
- 23: Rad
- 24: Rahmen
- L: Abstand
- L': Abstand
- M: Mitte
- N: Nachlauf
- S₁: Spurweite
- S₂: Spurweite
- W: Drehwinkel

## Patentansprüche

1. Anhängerfahrzeug zur Verbindung mit einem Zugfahrzeug, insbesondere einem Schwerlast-Lkw, mit einem sich über die Fahrzeuglänge erstreckenden Tragrahmen (9), der in seinem vorderen Bereich mit einem Königszapfen (3) zur Verbindung mit dem Zugfahrzeug versehen ist, sowie mit mindestens zwei gegenüber dem Tragrahmen (9) abgestützten, vorzugsweise luftgefederten Achsen, wobei sich die in Fahrtrichtung vorderste Achse (7) zur Entlastung des Königszapfens (3) über einen um eine vertikale Drehachse (11) drehbaren Drehschemel (10) gegenüber dem Tragrahmen (9) abstützt, und die Drehachse (11) in Fahrtrichtung vor der Entlastungsachse (7) angeordnet ist,
**dadurch gekennzeichnet,**
**daß** die Spurweite (S₁) der Entlastungsachse (7) nicht mehr als 2/3 der Spurweite (S₂) der Achse bzw. der Achsen des Achsaggregates (6a, 6b, 6c) beträgt.

2. Anhängerfahrzeug nach Anspruch 1, **dadurch gekennzeichnet, daß** die Entlastungsachse (7) mindestens zu 50% Anteil den Königszapfen (3) entlastet.

3. Anhängerfahrzeug nach Anspruch 1 oder Anspruch 2, **dadurch gekennzeichnet, daß** die Entlastungsachse (7) in Längsrichtung des Anhängerfahrzeuges vor der Mitte (M) des Abstandes (L) zwischen Königszapfen (3) und Achsaggregat (6a, 6b, 6c) angeordnet ist.

4. Anhängerfahrzeug nach Anspruch 1, **dadurch gekennzeichnet, daß** die Entlastungsachse (7) an einem einzigen Längslenker (16) geführt ist, der auf der Fahrzeugmittelachse (12) und mittig zwischen den beiden Rädern (23) der Entlastungsachse (7) angeordnet ist.

5. Anhängerfahrzeug nach einem der Ansprüche 1 bis 4, **dadurch gekennzeichnet, daß** die Entlastungsachse (7) mittels eines Liftaggregates (21) anhebbar ist.

6. Anhängerfahrzeug nach Anspruch 5, **gekennzeichnet durch** Mittel zur selbsttätigen Betätigung des Liftaggregates (21) bei Rückwärtsfahrt des Anhängerfahrzeuges.

7. Anhängerfahrzeug nach einem der Ansprüche 1 bis 6, **dadurch gekennzeichnet, daß** die Entlastungsachse (7) über mindestens ein Luftfederelement (17) gegenüber dem Drehschemel (10) abgestützt ist.

8. Anhängerfahrzeug nach Anspruch 7, **gekennzeichnet durch** Mittel zur Steuerung des Luftdrucks in dem Luftfederelement (17) in Abhängigkeit von der Größe der Stützkraft auf den Königszapfen (3) und/oder in Abhängigkeit von der auf einer oder mehreren Achsen (4, 5) des Zugfahrzeuges (1) lastenden Gewichtskraft.

9. Anhängerfahrzeug nach Anspruch 8, **gekennzeichnet durch** einen Drucksensor zur Erfassung der Stützkraft auf den Königszapfen (3).

10. Anhängerfahrzeug nach Anspruch 8, **gekennzeichnet durch** einen Drucksensor zur Erfassung des Luftdrucks in einem Luftfederelement der Achse (4, 5) des Zugfahrzeuges (1).

11. Anhängerfahrzeug nach Anspruch 7, **gekennzeichnet durch** eine Eingabeeinrichtung zum manuellen Eingabe von Steuerparametern, in deren Abhängigkeit der Luftdruck in dem Luftfederelement (17) angepaßt wird.

12. Anhängerfahrzeug nach Anspruch 7, **gekennzeichnet durch** Mittel zur Steuerung des Luftdrucks in dem Luftfederelement (17) in Abhängigkeit von der Fahrzeugverzögerung.

13. Anhängerfahrzeug nach Anspruch 12, **dadurch gekennzeichnet, daß** die Mittel zur Steuerung des Luftdrucks in dem Luftfederelement (17) einen die Fahrzeugverzögerung erfassenden Beschleunigungssensor umfassen.

14. Anhängerfahrzeug nach Anspruch 12, **dadurch gekennzeichnet, daß** die Mittel zur Steuerung des Luftdrucks in dem Luftfederelement (17) einen Sensor zur Wahrnehmung der Betätigung einer auf gebremste Achsen (6a, 6b, 6c) des Anhängerfahrzeuges (2) wirkenden Verzögerungseinrichtung umfassen.

15. Anhängerfahrzeug nach einem der Ansprüche 12 bis 14, **dadurch gekennzeichnet, daß** die Mittel den Luftdruck in dem Luftfederelement (17) absenken, sobald das Fahrzeug verzögert.

16. Anhängerfahrzeug nach einem der Ansprüche 1 bis 15, **dadurch gekennzeichnet, daß** die Anordnung aus Drehkranz (11) und Drehschemel (10) zumindest teilweise in einem in dem Tragrahmen (9) gebildeten Aufnahmeraum versenkt angeordnet ist.

## Claims

1. Trailer vehicle for connection to a towing vehicle, in particular to a heavy goods lorry, said trailer vehicle comprising a support frame (9) which extends over the length of the vehicle and is provided in its front region with a kingpin (3) for connection to the towing vehicle, and also comprising at least two preferably airsprung axles which are supported with respect to the support frame (9), wherein the front axle (7) as seen in the direction of travel, in order to relieve the load on the kingpin (3), is supported with respect to the support frame (9) via a fifth wheel (10) which can rotate about a vertical axis of rotation (11), and the axis of rotation (11) is arranged in front of the relieving axle (7) as seen in the direction of travel, **characterized in that** the track width (S₁) of the relieving axle (7) is no more than 2/3 of the track width (S₂) of the axle or axles of the axle assembly (6a, 6b, 6c).

2. Trailer vehicle according to Claim 1, **characterized in that** the relieving axle (7) relieves the load on the kingpin (3) by at least 50%.

3. Trailer vehicle according to Claim 1 or Claim 2, **characterized in that** the relieving axle (7) is arranged in front of the centre (M) of the distance (L) between the kingpin (3) and the axle assembly (6a, 6b, 6c), as seen in the longitudinal direction of the trailer vehicle.

4. Trailer vehicle according to Claim 1, **characterized in that** the relieving axle (7) is guided on a single trailing arm (16) which is arranged on the vehicle centre axis (12) and centrally between the two wheels (23) of the relieving axle (7).

5. Trailer vehicle according to any of Claims 1 to 4, **characterized in that** the relieving axle (7) can be lifted by means of a lifting unit (21).

6. Trailer vehicle according to Claim 5, **characterized by** means for automatically actuating the lifting unit (21) during reversing travel of the trailer vehicle.

7. Trailer vehicle according to any of Claims 1 to 6, **characterized in that** the relieving axle (7) is supported with respect to the fifth wheel (10) via at least one air spring element (17).

8. Trailer vehicle according to Claim 7, **characterized by** means for controlling the air pressure in the air spring element (17) as a function of the magnitude of the supporting force on the kingpin (3) and/or as a function of the weight force loaded on one or more axles (4, 5) of the towing vehicle (1).

9. Trailer vehicle according to Claim 8, **characterized by** a pressure sensor for detecting the supporting force on the kingpin (3).

10. Trailer vehicle according to Claim 8, **characterized by** a pressure sensor for detecting the air pressure in an air spring element of the axle (4, 5) of the towing vehicle (1).

11. Trailer vehicle according to Claim 7, **characterized by** an input device for manually inputting control parameters, as a function of which the air pressure in the air spring element (17) is adapted.

12. Trailer vehicle according to Claim 7, **characterized by** means for controlling the air pressure in the air spring element (17) as a function of the slowing-down of the vehicle.

13. Trailer vehicle according to Claim 12, **characterized in that** the means for controlling the air pressure in the air spring element (17) comprise an acceleration sensor which detects the slowing-down of the vehicle.

14. Trailer vehicle according to Claim 12, **characterized in that** the means for controlling the air pressure in the air spring element (17) comprise a sensor for detecting the actuation of a slowing-down device acting on braked axles (6a, 6b, 6c) of the trailer vehicle (2).

15. Trailer vehicle according to any of Claims 12 to 14, **characterized in that** the means reduce the air pressure in the air spring element (17) as soon as the vehicle slows down.

16. Trailer vehicle according to any of Claims 1 to 15, **characterized in that** the arrangement consisting of bogie (11) and fifth wheel (10) is arranged in a lowered position at least partially in a receiving space formed in the support frame (9).

## Revendications

1. Véhicule remorque prévu pour accrochage à un véhicule tracteur, notamment à un véhicule de transport poids lourd, avec un châssis porteur (9) s'étendant sur la longueur du véhicule, qui est muni dans sa partie avant d'un pivot maître (3) pour l'accrochage au véhicule tracteur, ainsi qu'avec au moins deux essieux suspendus par rapport au châssis porteur, de préférence à ressorts pneumatiques, l'essieu (7) le plus en avant dans la direction de déplacement s'appuyant par rapport au châssis porteur, afin de soulager le pivot maître (3), sur une sellette d'accouplement (10) pouvant tourner autour d'un axe de rotation vertical (11) et l'axe de rotation (11) étant placé devant l'essieu de décharge (7) dans la direction de déplacement,
**caractérisé en ce que** la largeur de voie (S₁) de l'essieu de décharge (7) ne vaut pas plus des 2/3 de la largeur de voie (S₂) de l'essieu resp. des essieux du groupe d'essieux (6a, 6b, 6c).

2. Véhicule remorque selon la revendication 1, **caractérisé en ce que** l'essieu de décharge (7) décharge le pivot maître (3) à au moins 50 %.

3. Véhicule remorque selon la revendication 1 ou 2, **caractérisé en ce que** l'essieu de décharge (7) est placé, dans la direction longitudinale du véhicule remorque, devant le milieu (M) de la distance (L) entre le pivot maître (3) et le groupe d'essieux (6a, 6b, 6c).

4. Véhicule remorque selon la revendication 1, **caractérisé en ce que** l'essieu de décharge (7) est guidé sur un unique bras oscillant longitudinal (16) qui est placé sur l'axe médian (12) du véhicule et au milieu entre les deux roues (23) de l'essieu de décharge (7).

5. Véhicule remorque selon l'une des revendications 1 à 4, **caractérisé en ce que** l'essieu de décharge (7) peut être levé au moyen d'un groupe de levage (21).

6. Véhicule remorque selon la revendication 5, **caractérisé par** des moyens d'actionnement automatique du groupe de levage (21) lors d'une marche arrière du véhicule remorque.

7. Véhicule remorque selon l'une des revendications 1 à 6, **caractérisé en ce que** l'essieu de décharge (7) est suspendu par rapport au pivot maître (10) par l'intermédiaire d'au moins un élément à ressort pneumatique (17).

8. Véhicule remorque selon la revendication 7, **caractérisé par** des moyens pour commander la pression de l'air dans l'élément à ressort pneumatique (17) en fonction de la valeur de la force d'appui sur le pivot maître (3) et/ou en fonction de la force pondérale s'exerçant sur un ou plusieurs essieux (4, 5) du véhicule tracteur (1).

9. Véhicule remorque selon la revendication 8, **caractérisé par** un capteur de pression pour relever la force d'appui sur le pivot maître (3).

10. Véhicule remorque selon la revendication 8, **caractérisé par** un capteur de pression pour relever la pression de l'air dans un élément à ressort pneumatique de l'essieu (4, 5) du véhicule tracteur (1).

11. Véhicule remorque selon la revendication 7, **caractérisé par** un dispositif de saisie permettant d'entrer manuellement des paramètres de commande, en fonction desquels la pression de l'air dans l'élément à ressort pneumatique (17) est adaptée.

12. Véhicule remorque selon la revendication 7, **caractérisé par** des moyens pour commander la pression de l'air dans l'élément à ressort pneumatique (17) en fonction du ralentissement du véhicule.

13. Véhicule remorque selon la revendication 12, **caractérisé en ce que** les moyens de commande de la pression de l'air dans l'élément à ressort pneumatique (17) comprennent un capteur d'accélération détectant le ralentissement du véhicule.

14. Véhicule remorque selon la revendication 12, **caractérisé en ce que** les moyens de commande de la pression de l'air dans l'élément à ressort pneumatique (17) comprennent un capteur pour détecter l'actionnement d'un dispositif de ralentissement agissant sur des essieux freinés (6a, 6b, 6c) du véhicule remorque (2).

15. Véhicule remorque selon l'une des revendications 12 à 14, **caractérisé en ce que** les moyens abaissent la pression de l'air dans l'élément à ressort pneumatique (17) dès que le véhicule ralentit.

16. Véhicule remorque selon l'une des revendications 1 à 15, **caractérisé en ce que** l'ensemble composé de la couronne rotative (11) et de la sellette d'accouplement (10) est placé au moins partiellement en renfoncement dans un logement formé dans le châssis porteur (9).
